# EUROPEAN PATENT APPLICATION

(11) **EP 3 229 155 A1**
(43) Date of publication of application: **11.10.2017**
(21) Application number: 15865255.2
(22) Date of filing: 18.11.2015
(51) Int. Cl.: G06F 17/50

(54) **3D MODEL CREATION ASSISTANCE SYSTEM AND METHOD**

(30) Priority: 01.12.2014 JP 2014243168
(71) Applicant: Hitachi, Ltd., Tokyo 100-8280 (JP)
(72) Inventor: HORI, Yoshinari, Tokyo 1008280 (JP); ISHIDA, Tomotoshi, Tokyo 1008280 (JP)
(74) Representative: MERH-IP Matias Erny Reichl Hoffmann Patentanwälte PartG mbB
(86) International application number: PCT/JP2015/082332
(87) International publication number: WO 2016/088553

(57) **Abstract**

A 3D model creation support system which supports creation of a 3D model with attribute of an object configured with a plurality of configuration elements connected to each other, and a method thereof is provided. A system information database 41 in which system information including connection relationships between the plurality of configuration elements is registered; a shape model library 43 in which shape models corresponding to each of the plurality of configuration elements are registered; configuration element selection means 42 that selects configuration elements whose 3D models are not created among the plurality of configuration elements, based on the system information which is registered in the system information database; and configuration element identification means 44 that acquires a predetermined shape model corresponding to a predetermined configuration element which is selected by the configuration element selection means from the shape model library and creates a 3D model of the predetermined configuration element by matching the predetermined shape model to the point group data, are included.

## Description

### Technical Field

The present invention relates to a system and a method which support creation of a 3D model based on point group data of a surface of an object.

### Background Art

Recently, plant management is performed by using 3D-CAD data in a power generation plant or a chemical plant. Meanwhile, the 3D-CAD data does not exist and management is performed based on a drawing of paper in some plants which have been constructed in an earlier time.

Hence, recently, a service of creating the 3D model based on point group data of the plant acquired by a laser measurement is generally provided. Recently, a laser measurement device which can acquire accurate point group data and acquire color information using an attached camera is developed, and a 3D model with color which is created based on the point group data acquired by the laser measurement device faithfully reproduces shapes and colors of each apparatus and each pipe, and thus, it is possible to visually determine which part corresponds to the apparatus or the pipe. In addition, a technology of converting the point group data into the 3D model is described in PTL 1. PTL 1 discloses a method of using a two-dimensional drawing of an apparatus and converting point group data of an apparatus with a complex shape into an accurate 3D model.

### Citation List

### Patent Literature

- PTL 1:: JP-A-2001-184527

### Summary of Invention

### Technical Problem

However, in a case where a 3D model of the entire plant is created by using a technology described in PTL 1, each configuration element is not separated, and thus, it cannot be used for management of the plant as it is. Hence, when a 3D model which can be used for the management of the plant is created, an operator visually identifies which portion of point group data displayed on a screen of a computer corresponds to an apparatus or a pipe, a method of converting each apparatus or each pipe into 3D models is generally employed, and an operator has a large burden.

The present invention is to solve the above problems, and an object thereof is to provide a 3D model creation support system which supports creation of a 3D model with attribute of an object configured with a plurality of configuration elements connected to each other, and a method thereof.

### Solution to Problem

In order to solve the above problem, the present invention includes a 3D model creation support system that supports creation of a 3D model based on point group data of a surface of an object which is configured with a plurality of configuration elements connected to each other including a system information database in which system information including connection relationships between the plurality of configuration elements is registered; a shape model library in which shape models corresponding to each of the plurality of configuration elements are registered; configuration element selection means for selecting configuration elements whose 3D models are not created among the plurality of configuration elements, based on the system information which is registered in the system information database; and configuration element identification means for acquiring a predetermined shape model corresponding to a predetermined configuration element which is selected by the configuration element selection means from the shape model library and creating a 3D model of the predetermined configuration element by matching the predetermined shape model to the point group data.

### Advantageous Effects of Invention

According to the present invention, it is possible to efficiently create a 3D model with attribute of an object configured with a plurality of configuration elements connected to each other.

### Brief Description of Drawings

[Fig. 1] Fig. 1 is a configuration diagram of a 3D model creation support system according to an embodiment of the present invention.
[Fig. 2] Fig. 2 is a view illustrating an example of point group data of a plant.
[Fig. 3] Fig. 3 is a diagram illustrating an example of a plant system diagram.
[Fig. 4] Fig. 4 is a diagram illustrating an example of attribute information of an apparatus included in system information extracted from the plant system diagram.
[Fig. 5] Fig. 5 is a diagram illustrating an example of attribute information of a pipe included in system information extracted from the plant system diagram.
[Fig. 6] Fig. 6 is a diagram illustrating an example of connection information of the apparatus and the pipe included in the system information extracted from the plant system diagram.
[Fig. 7] Fig. 7 is a diagram illustrating a modification example of the plant system diagram.
[Fig. 8] Fig. 8 is a diagram illustrating an example of 3D model with attribute of the plant.
[Fig. 9] Fig. 9 is a flowchart illustrating processing of the 3D model creation support system according to a first embodiment.
[Fig. 10] Fig. 10 is a view illustrating an example of an operation screen which is displayed in a display device included in the 3D model creation support system.
[Fig. 11] Fig. 11 is a view illustrating an example of an operation screen which is displayed in the display device included in the 3D model creation support system.
[Fig. 12] Fig. 12 is a view illustrating an example of an operation screen which is displayed in the display device included in the 3D model creation support system.
[Fig. 13] Fig. 13 is a flowchart illustrating detailed identification processing.
[Fig. 14] Fig. 14 is a view illustrating processes identifying the pipe connected to a tank.
[Fig. 15] Fig. 15 is a flowchart illustrating processing of a 3D model creation support system according to a second embodiment.
[Fig. 16] Fig. 16 is a view illustrating a 3D model with attribute shortly after configuration elements other than pipes are identified in the second embodiment.
[Fig. 17] Fig. 17 is a view illustrating a 3D model with attribute shortly after the configuration elements other than the pipes and connection parts between the pipes are identified in the second embodiment.

### Description of Embodiments

Hereinafter, embodiments of the present invention will be described with reference to the drawings. In each drawing, the same symbols or reference numerals will be attached to the same or corresponding portions, and repeated description will be appropriately omitted.

### Embodiment 1

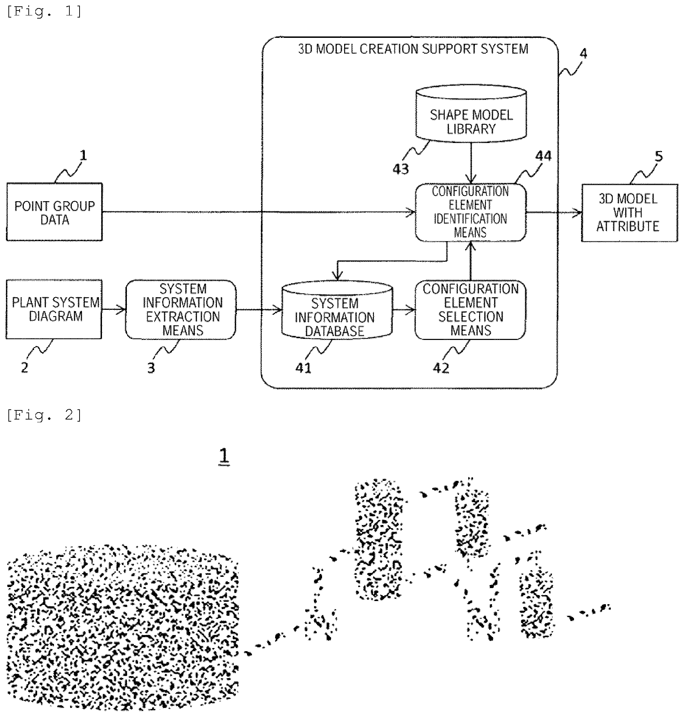

Fig. 1 is a configuration diagram of a 3D model creation support system. The 3D model creation support system 4 according to the present embodiment creates a 3D model 5 with attribute, based on point group data 1 of a plant and system information extracted from plant system diagram 2 by system information extraction means 3. A configuration of the 3D model creation support system 4 and a creation algorithm of the 3D model with attribute will be described below.

Fig. 2 is a schematic view illustrating an example of the point group data 1 of the plant. The 3D point group data 1 is a collection of coordinate data of each point on surfaces of each apparatus and each pipe which configure the plant, and is acquired by measuring distances to each point on the surfaces using a laser measurement device or the like.

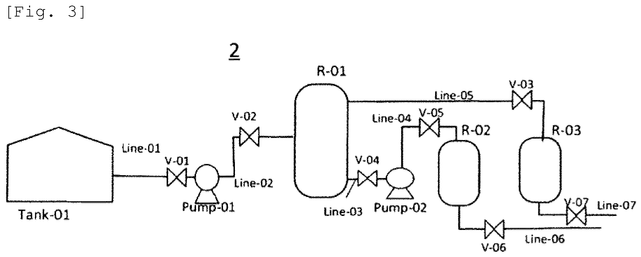

Fig. 3 is a diagram illustrating an example of the plant system diagram 2. The plant system diagram 2 is a diagram in which connection relationships between each apparatus and each pipe that configure the plant are described. The plant according to the present embodiment includes apparatuses of a tank Tank-01, pumps Pump-01 and Pump-02, reaction devices R-01, R-02, and R-03, and the like, and the apparatuses are connected to each other through pipes Line-01, Line-02, Line-03, Line-04, Line-05, Line-06, and Line-07, and a plurality of valves V-01, V-02, V-03, V-04, V-05, V-06, and V-07 are provided in each pipe. Control signals or the like for instruments such as a thermometer and a pressure gauge, or each apparatus are also described as data items in a general plant system diagram, but it is assumed that a system diagram in which the data items are not displayed is used in the present embodiment. If the plant system diagram is created by using a CAD, switching of display/non-display for each data item can be performed by a simple operation. In addition, a format of the plant system diagram 2 includes a drawing of a paper medium, an electronic drawing as mere image information, and an electronic drawing created by an intelligent CAD, but the electronic drawing created (intelligentized) by the intelligent CAD will be described as an example in the present embodiment. Even if there is a system diagram of a paper medium or a digitized system diagram as mere image information, intelligentizing can be made by recognizing the pipe name described in the drawing by using a drawing recognition technology, and a connection relationship between apparatuses. In a case of the intelligentized electronic drawing, each piece of attribute information is linked to the apparatuses and pipes illustrated in the drawing, and the attribute information can be extracted by using the intelligent CAD or other programs.

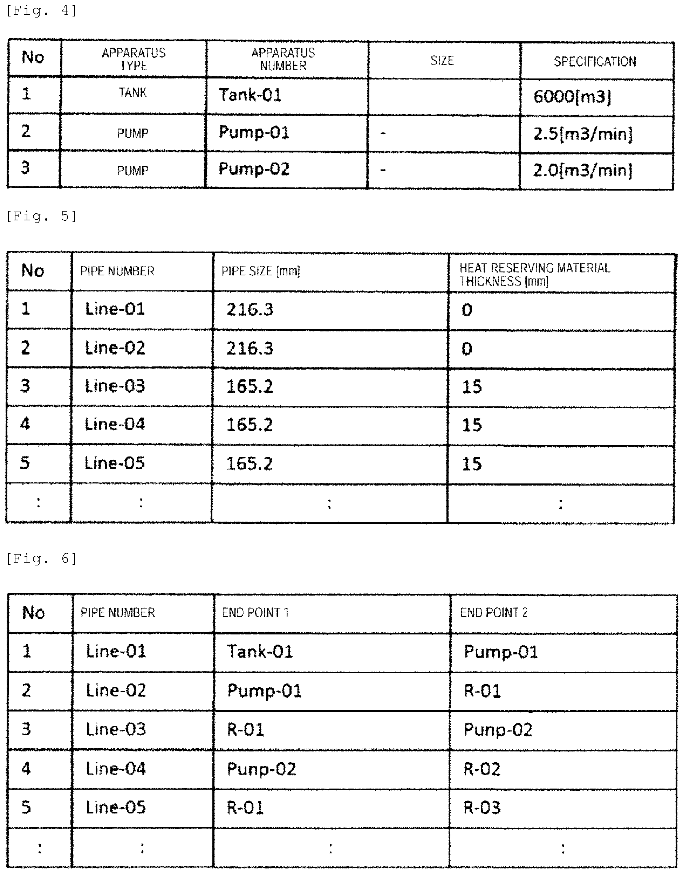

Fig. 4 is a diagram illustrating an example of the attribute information of an apparatus included in system information extracted from the plant system diagram 2. The attribute information of the apparatus is configured by an apparatus type, an apparatus number, a size, and specification. The apparatus number is an identification number for identifying the apparatus. Information described in the plant system diagram 2 is only the apparatus number among the information, but other information can be extracted from CAD software by using the apparatus number as a key. All the information cannot be extracted, and for example, a size of the pump is undefined because size information of the pump is not set in the present embodiment.

Fig. 5 is a diagram illustrating an example of attribute information of a pipe included in system information extracted from the plant system diagram 2. The attribute information of the pipe is configured by a pipe number, a pipe size, and a heat reserving material thickness. The pipe number is an identification number for identifying the pipe, the pipe size is an outer diameter of the pipe, and the heat reserving material thickness is a thickness of a heat reserving material wound around the pipe. Hence, "outer diameter of pipe + 2 × heat reserving material thickness" becomes an outer diameter in appearance of the pipe which is indicated by point group data.

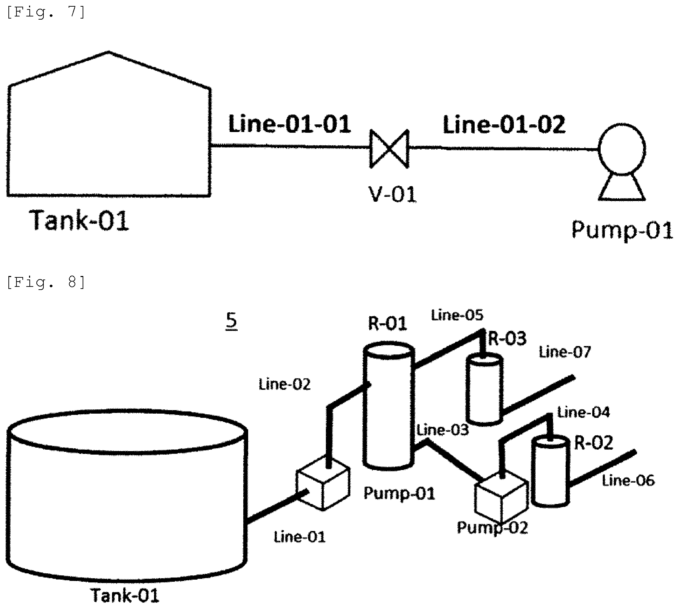

Fig. 6 is a diagram illustrating an example of connection information of the apparatus and the pipe included in the system information extracted from the plant system diagram 2. The connection information is configured by pipe numbers of each pipe, and apparatus numbers of the apparatuses connected to both ends (end point 1 and end point 2) of each pipe. In the present embodiment, a valve or a T-pipe is not considered and it is assumed that two pipes connected to each other through the valve are handled as one pipe, for the sake of simplification. For example, one pipe number Line-01 is attached to two pipes connected to each other through the valve V-01 in Fig. 3, and it is assumed that the 3D model of the valve V-01 is not created. In a case where the valve V-01 needs to be identified, the valve V-01 is included in the configuration element, and for example, separate pipe numbers Line-01 and Line-01-02 may be respectively attached to the two pipes arranged on both end sides of the valve V-01, as illustrated in Fig. 7. In the following description, creating a 3D model of a configuration element is referred to as "identifying a configuration element" as appropriate.

Fig. 8 is a diagram illustrating an example of the 3D model 5 with attribute of the plant. The 3D model 5 with attribute is configured by 3D models of each apparatus and each pipe arranged in a 3D-CAD, and each attribute information (not illustrated) is linked to each 3D model.

Next, returning to Fig. 1, the configuration of the 3D model creation support system 4 will be described. The 3D model creation support system 4 includes a system information database 41, configuration element selection means 42, a shape model library 43, and configuration element identification means 44.

The system information database 41 registers system information (attribute information of the apparatus and the pipe, connection information) extracted from the plant system diagram 2 by the system information extraction means 3. The system information extraction means 3 may configure a part of the 3D model creation support system 4.

The configuration element selection means 42 selects a configuration element which is next identified from among the unidentified configuration elements, based on the system information registered in the system information database 41.

The shape model library 43 registers shape models corresponding to each apparatus and each pipe (configuration element) of the plant. The shape model includes a shape corresponding to each apparatus and each pipe which configure the plant, and is a 3D model which can freely modify a size by adjusting a shape parameter. In the present embodiment, the shape model corresponding to the tank and the reaction device is a columnar model having an outer diameter parameter and a height parameter as a shape parameter, the shape model corresponding to the pump is a rectangular model having a width parameter, a depth parameter, and a height parameter as the shape parameter, and the shape model corresponding to the pipe is a cylindrical model having an outer diameter parameter and a length parameter as a shape parameter. By registering a complex shape model having multiple shape parameters in the shape model library 43, the 3D model 5 with attribute which is more faithful to a real object can be created.

The configuration element identification means 44 acquires a shape model corresponding to a configuration element selected by the configuration element selection means 42 from the shape model library 43, and disposes a 3D model created by matching the shape model to the point group data 1 in 3D-CAD. Here, the matching indicates that a shape parameter is adjusted such that root mean square value of distances between the shape model and each point of the point group data is minimized.

Next, a creation algorithm of the 3D model with attribute will be described.

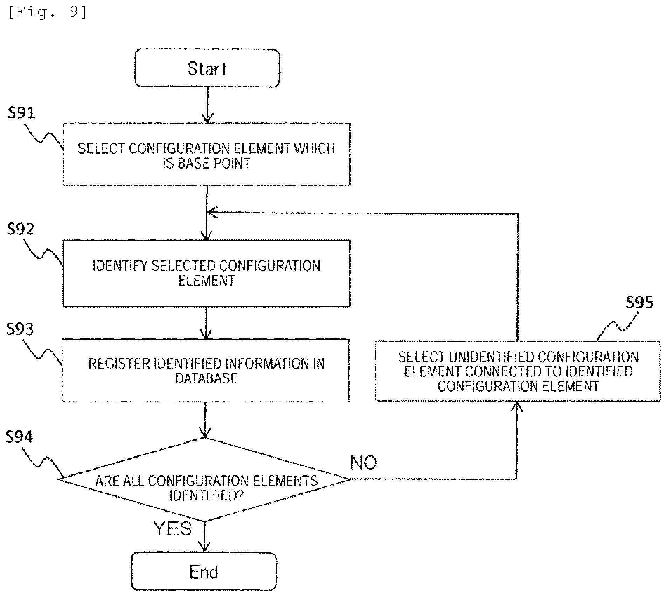

Fig. 9 is a flowchart illustrating processing of the 3D model creation support system 4. The 3D model creation support system 4 according to the present embodiment identifies a configuration element which is a base point, and thereafter sequentially identifying configuration elements connected to the identified configuration element, thereby, creating the 3D model 5 with attribute of the entire plant. Hereinafter, each step configuring the flow of Fig. 9 will be sequentially described.

First, a configuration element which is a base point is selected in step S91. Here, for example, a predetermined rule such as selecting the largest configuration element is set and the 3D model creation support system 4 can also automatically select a configuration element based on the rule, but a case where an operator manually performs selection will be described as an example in the present embodiment.

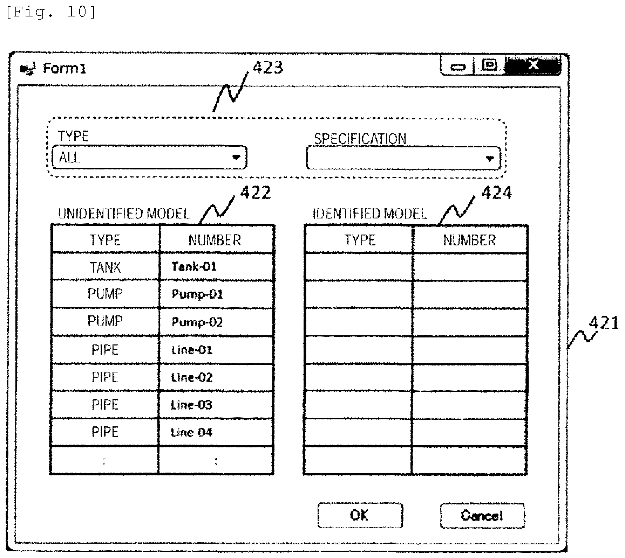

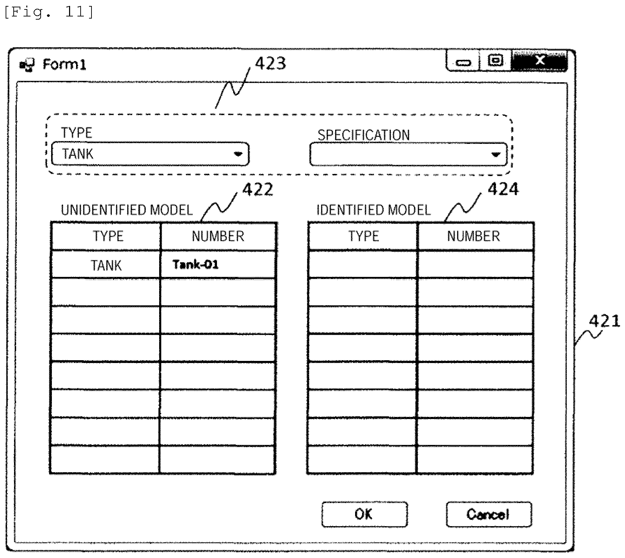

Fig. 10 is a view illustrating an example of an operation screen which is displayed in a display device (not illustrated) included in the 3D model creation support system 4. An operation screen 421 includes an unidentified model list 422 in which types and numbers of unidentified configuration elements are displayed, a narrowing condition setting region 423 for designating narrowing conditions of the configuration element which is a base point from the unidentified configuration elements, and identified model list 424 in which types and numbers of identified configuration elements are displayed, and configures a part of the configuration element selection means 42 (refer to Fig. 1). At point of time when the operator selects (performs step S91) the configuration element which is the base point, any configuration element is not identified, and thus, all the types and numbers of all configuration elements are displayed in the unidentified model list 422 of the operation screen 421. The operator selects a configuration element which is first identified from the unidentified model list 422. In a case where there are many unidentified configuration elements, selection candidates can be narrowed down by designating types and specification of the configuration elements by using the narrowing condition setting region 423. For example, if a "tank" is designated as the type of the configuration element by the narrowing condition setting region 423, only the tank is displayed as the configuration element in the unidentified model list 422, as illustrated in Fig. 11. In the following steps, a case where the tank Tank-01 is selected will be described as an example.

In step S92, the configuration element (tank Tank-01) selected in step S91 is identified. Thereby, a 3D model of the configuration element (tank Tank-01) is disposed in the 3D-CAD. Details of identification processing will be described below.

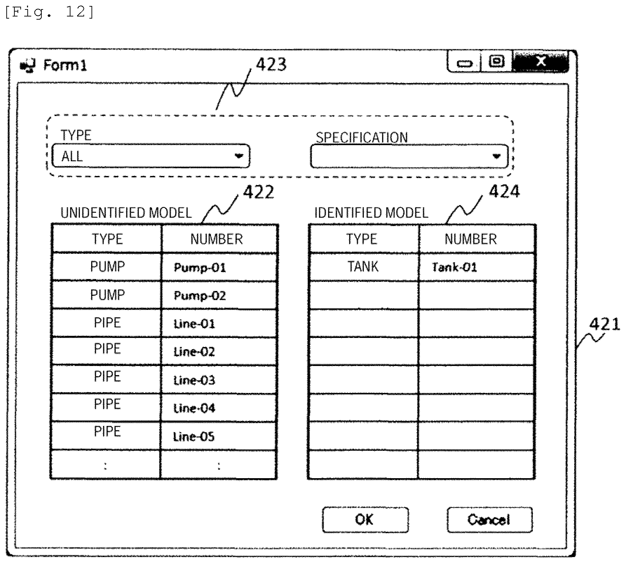

In step S93, the configuration element (tank Tank-01) identified in step S92 registers information which is identified in the system information database 41. If registering the information is completed, information of the tank Tank-01 is moved from the unidentified model list 422 to the identified model list 424, as illustrated in Fig. 12.

In step S94, whether or not all configuration elements are identified is determined, and in a case where all configuration elements are identified, the flow ends, and in a case where there is an unidentified configuration element, the flow proceeds to step S95. In the present example, configuration elements other than the tank Tank-01 are unidentified, and thus, the flow proceeds to step S95.

In step S95, unidentified configuration element (pipe Line-04) connected to the identified configuration element (tank Tank-01) is selected, and processing after step S92 is repeatedly performed.

By the above flow, the 3D model 5 with attribute illustrated in Fig. 8 can be created.

In the aforementioned description, a case where a configuration element extracted in step S95 is one is described as an example, but in a case where a plurality of configuration elements are extracted in step S95, processing of the subsequent step S92 is complicated. Hereinafter, detailed processing of step S92 will be described by also including a case where a plurality of configuration elements are extracted in step S95.

To begin with, a general sequence of converting the point group data into the 3D model is as follows.
(1) A type of a curved surface approximating a surface of an object where a point group exists is assumed.
(2) A position of the curved surface, a direction, and a shape parameter are adjusted such that root mean square value of distances (hereinafter, referred to as deviation) between each point of the point group and the curved surface of the type assumed in above (1) is minimized.
(3) In a case where the curved surface assumed in above (1) cannot approximate the surface of the object where the point group exists, that is, in a case where deviation calculated in above (2) is not below a predetermined reference value, the type of the assumed curved surface is modified and above (1) and (2) are repeated.

However, in a case where the point group data of an object configured with a plurality of configuration elements such as the plant is converted into the 3D model in the aforementioned sequence, lots of labor and efforts are required.

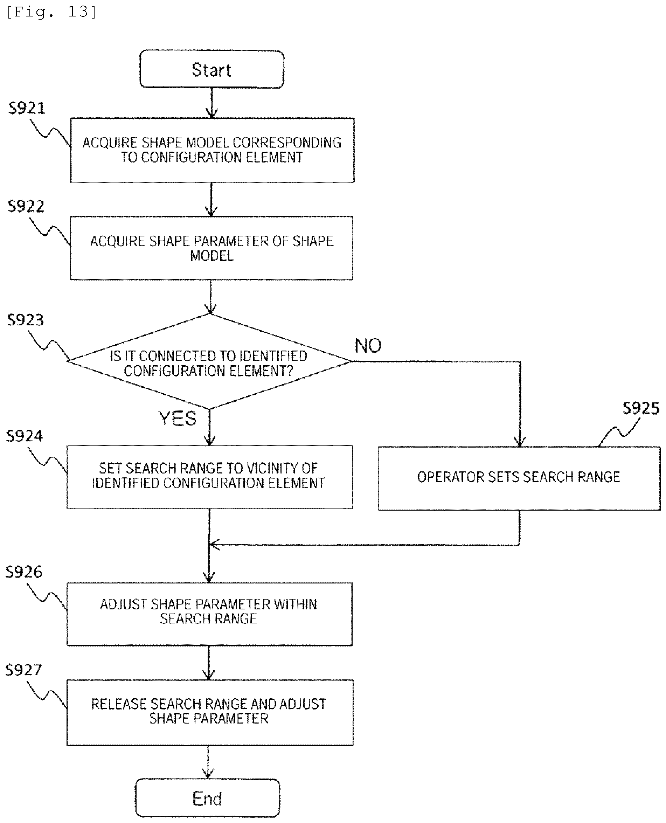

Subsequently, a method of specifically identifying the configuration element will be described. Fig. 13 is a flowchart illustrating detailed identification processing (step S92 of Fig. 9). Hereinafter, each step configuring the flow of Fig. 13 will be sequentially described.

First, in step S921, a shape model corresponding to a configuration element (hereinafter, referred to as an identification target) to be identified is acquired. For example, in a case where the identification target is a pipe, a cylindrical model is selected as a shape model.

In step S922, a shape parameter of the shape model is acquired. For example, in a case where the acquired shape model is a cylindrical model, an outer diameter parameter and a length parameter are acquired as the shape parameter.

In step S923, whether or not the identification target is connected to the identified configuration element is determined, and in a case where identification target is connected to the identified configuration element, the flow proceeds to step S924, and in a case where identification target is not connected to the identified configuration element, the flow proceeds to step S925. Here, in the flow illustrated in Fig. 9, in a case where step S92 followed by step S95 is performed, an identification element is connected to the identified configuration element, and thus, it is determined that the answer is YES in step S932, and the flow proceeds to step S924. Meanwhile, in the flow illustrated in Fig. 9, in a case where step S92 followed by step S91 is performed, the identification target is the configuration element which is the base point, and is not connected to the identified configuration element, and thus, it is determined that the answer is NO in step S923 and the flow proceeds to step S925.

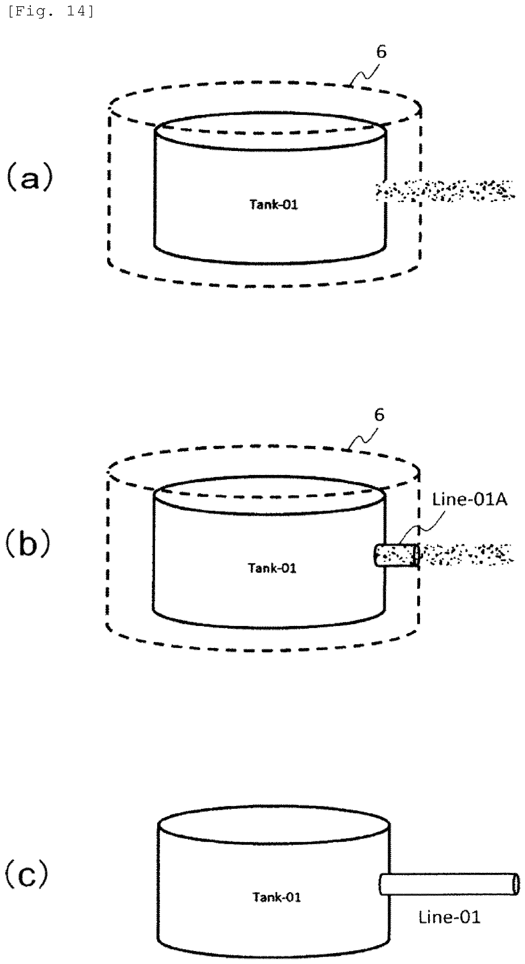

In step S924, the point group data 1 designates a search range of the identification target. Here, since it is obvious that the identification target is connected to the identified configuration element and exists near the identified configuration element, a region surrounding the identified configuration element is set as a search range. For example, in a case where the identification target is the pipe Line-01, a region surrounding the tank Tank-01 is set as a search range 6 as illustrated in Fig. 14(a). As such, as the point group data 1 limits a search range of the identification target, it is possible to reduce the amount of calculation processing necessary for creating the 3D model.

In step S925, the operator manually designates the search range of the selected configuration element in the point group data 1. Here, since the identified configuration element does not exist, it is difficult to automatically determine a range where the identification target exists in the point group data 1. Accordingly, the operator visually determines the range where the identification target exists, and sets the range as a search range. Setting of the search range is set by, for example, a drag operation of a mouse that is performed on a screen in which the point group data 1 is displayed. By selecting a small number of configuration elements with a characteristic shape in the entire plant as the identification target, a range where the identification target exists in the point group data 1 is easily determined.

In step S926, a position of the shape model and the shape parameter are adjusted such that deviation between the point group data 1 in the set search range and the acquired shape model is minimized. For example, in a case where the pipe Line-01 is selected as the identification target and a cylindrical model is selected as the shape model, matching the point group data to the cylindrical model is performed in the search range 6 as illustrated in Fig. 14(b), and the 3D model of a connection part Line-01A between the pipe Line-01 and the tank Tank-01 is created.

In step S927, the search range is released, the shape parameter of the shape model is adjusted to minimize deviation between the shape parameter and the point group data, and thereby, the 3D models of all configuration elements are created. For example, as illustrated in Fig. 14(c), the search range 6 is released, a length parameter of the cylindrical model Line-01A is adjusted such that deviation between the length parameter and the point group data 1 is minimized, and thereby, the 3D model of the entire pipe Line-01 is created.

By the above flow, the 3D model of the identification target can be automatically created. Furthermore, since the 3D model is created by limiting the search range of the identification target in the point group data 1 and adjusting the limited shape parameter of the shape model corresponding to the identification target, it is possible to reduce the amount of calculation processing necessary for creating the 3D model.

The above description is based on the premise that one configuration element is selected in step S95, that is, one unidentified configuration element is connected to the identified configuration element. Hereinafter, a case where a plurality of unidentified configuration elements is connected to the identified configuration element will be described.

For example, in step S95, in a case where two pipes are selected, if the two pipes have different outer diameters in appearance from each other, values of outer diameter parameters of the cylindrical models matched to each of the two pipes are different from each other, and thus, it is possible to specify each pipe number based on the attribute information (refer to Fig. 5) of the pipes, and to identify each pipe. Meanwhile, in a case where a plurality of the extracted outer diameters of the pipes in appearance are the same as each other, the values of the outer diameter parameters of the cylindrical models matched to each of the two pipes are also equal to each other, and thus, it is impossible to specify the pipe numbers based on the attribute information of the pipes. An identification method of this case will be described hereinafter.

For example, in the system diagram of Fig. 3, in a case where step S95 is performed after the 3D models are identified in the order of the tank Tank-01, the pipe Line-01, and the reaction device R-01, two pipes Line-03 and Line-05 are selected as unidentified configuration elements connected to the identified reaction device R-01.

Subsequently, in step S92, each pipe number of the two pipes cannot be specified, and thus, two possible pipe numbers Line-03 and Line-05 are given to each 3D model of each pipe. As such, giving a plurality of pipe numbers means that pipe numbers of the 3D models cannot be specified. However, in a subsequent step S93, the pipe numbers are registered in a database together with the pipes Line-03 and Line-05 as being identified.

After it is determined that the answer is NO in a subsequent step S94, a configuration element which is connected is extracted by using system information from one of the two pipes to which two pipe numbers Line-03 and Line-05 are given in step S95. In this case, since the two pipe numbers Line-03 and Line-05 are given to the 3D model of the one pipe, all configuration elements (reaction device R-03, pump Pump-02) connected to the pipe Line-03 or Line-05 are selected as the configuration element connected to the one pipe.

In the subsequent step S92, the reaction device R-03 or the pump Pump-2 is identified. Here, since corresponding shape models are different from each other in the reaction device R-03 and the pump Pump-2, the apparatus number can be specified based on a type of the shape model with smaller deviation. Furthermore, in a case where the specified apparatus is the reaction device R-03, the pipe number of the one pipe is specified as Line-05, based on the connection information (refer to Fig. 6).

In the above description, two pipes are described as an example, but the same specification can be made even in a case where the type and number of the configuration elements increase. That is, in a case where the identification number of the configuration element cannot be specified based on the connection information, processing is performed in a state where a plurality of possible identification numbers are given, and the configuration element can be specified based on the identification number and the connection information of the configuration element specified by subsequent processing.

In the 3D model creation support system 4 configured as described above, the 3D models of each configuration element are created by adjusting the limited shape parameters of the shape models corresponding to each configuration elements, and thus, it is possible to reduce the amount of calculation processing necessary for identifying each configuration elements. In addition, by identifying the 3D model of the configuration element which is the base point and thereafter by sequentially identifying the 3D models of the configuration elements connected to the identified configuration element, it is possible to limit the search range of the identification target and to further reduce the amount of calculation processing necessary for identifying each configuration element, in the point group data. As a result, it is possible to efficiently create the 3D model with attribute of the plant which is configured by a plurality of apparatuses connected to each other through the pipes.

### Embodiment 2

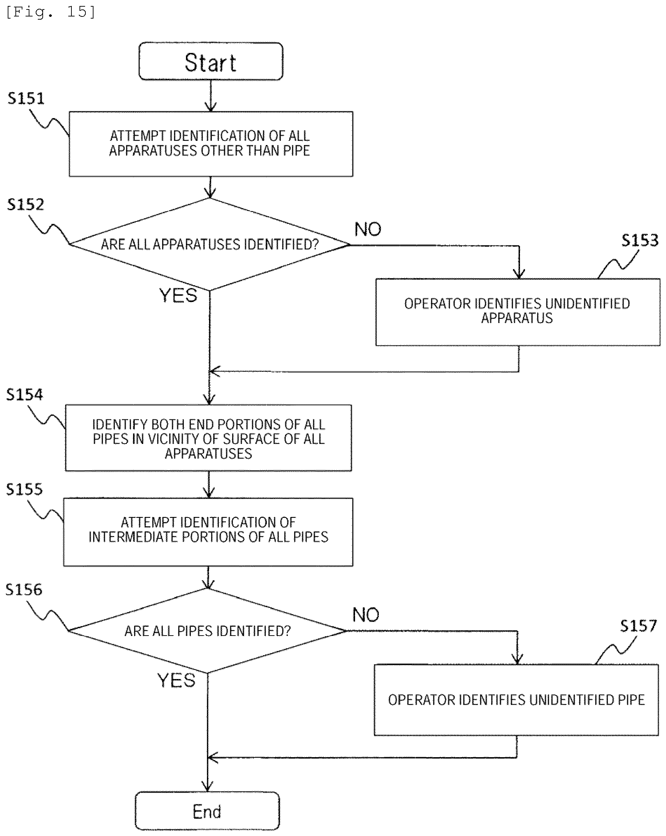

Next, a second embodiment of the present invention will be described with reference to Fig. 15 to Fig. 17. A main difference between the first embodiment and the second embodiment is that the 3D model creation support system 4 according to the first embodiment identifies the 3D model of the configuration element which is the base point and thereafter sequentially identifies the 3D models of the configuration elements connected to the identified configuration elements, and in contrast to this, the 3D model creation support system 4 according to the second embodiment first identifies all apparatuses other than pipes and subsequently identifies all the pipes.

Fig. 15 is a flowchart illustrating processing of the 3D model creation support system 4 according to the second embodiment. Hereinafter, each step configuring the flow of Fig. 15 will be sequentially described.

First, in step S151, identification of all the apparatuses other than the pipes among the configuration elements of the plant is attempted.

In step S152, whether or not all the apparatuses other than the pipes are identified is determined, in a case where the apparatuses are identified, the flow proceeds to step S154, and in a case where there is the apparatus which is not identified, the flow proceeds to step S154.

In step S153, an operator manually identifies unidentified apparatuses.

In step S154, a search range of the point group data 1 is limited to the vicinity of surfaces of all the apparatuses, and connection parts between each pipes are identified. A method of identifying the connection part between the pipes is the same as described in the first embodiment (refer to Fig. 14(b)).

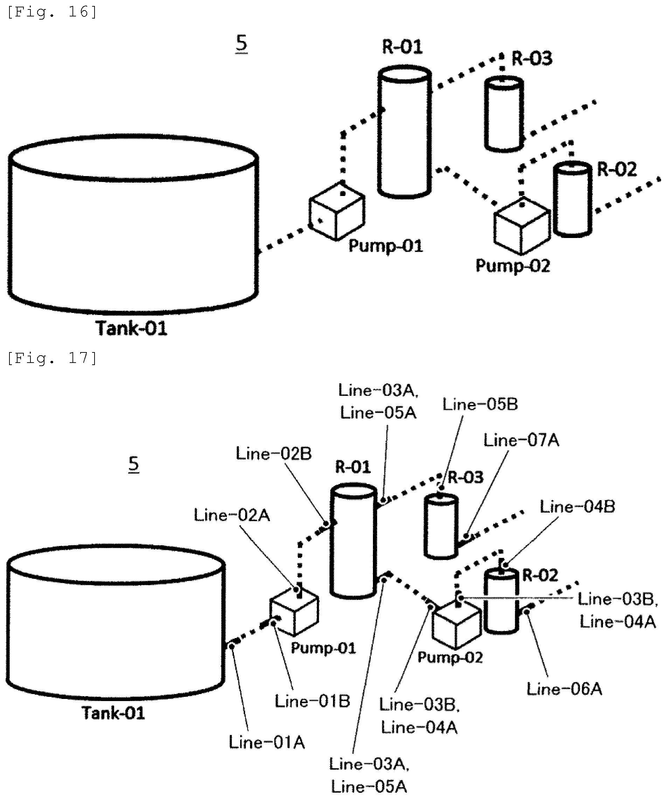

Here, an aspect of the 3D model 5 with attribute before and after step S154 will be described with reference to Fig. 16 and Fig. 17.

Fig. 16 is a view illustrating an example of the 3D model 5 with attribute of the plant before step S154 is performed. The 3D model (tank Tank-01, pump Pump-01, reaction device R-01, ...) of all the apparatuses other than the pipes is disposed in Fig. 16.

Fig. 17 is a view illustrating an example of the 3D model 5 with attribute of the plant after step S154 is performed. 3D models of connection parts (the connection part Line-01A between the pipe Line-01 and the tank Tank01, a connection part Line-01B of the pipe Line-01 to the pump Pump-01, a connection part Line-02A of the pipe Line-02 to the pump Pump-01, a connection part Line-02B of the pipe Line-02 to the reaction device R-01, ...) of each pipes are arranged in Fig. 17, in addition to the 3D models of all the apparatuses (tank Tank-01, pump Pump-01, reaction device R-01, ...). At this point of time, the present invention is not limited to what the pipe numbers can be specified with respect to all the pipes, as described in the first embodiment. For example, the pipe number of the pipe connecting the reaction device R-01 to the reaction device R-03 cannot be specified to any one of Line-03 and Line-05, and two identification numbers Line-03A and Line-05A indicating any one connection part of the pipes Line-03 and Line-05 are given to the 3D model of the connection part to the reaction device R-01. In the same manner, two identification numbers Line-03B and Line-05B indicating any one connection part of the pipes Line-03 and Line-05 are given to the connection part to the reaction device R-03.

Returning to Fig. 15, in step S155, identification of intermediate portions of all pipes is attempted. Three pipes Line-02, Line-03, and Line-05 are connected to the reaction device R-01 of the plant (refer to Fig. 3) according to the present embodiment, and it is impossible to separate the pipes Line-03 and Line-05 based on the pipe size (refer to Fig. 6). In the same manner, it is also impossible to separate the pipes Line-03 and Line-04 connected to the pump Pump-02. However, in Fig. 17, the 3D models of two connection parts to which identification numbers Line-03A and Line-05A are given, and the 3D models of two connection parts to which identification number Line-03B and Line-04A are given, respectively extend along the point group data, and any two connection parts of the four connection parts are specified as the connection parts of the pipe Line-03, based on whether or not the two connection parts are connected to each other, and the other two connection parts are specified as connection parts of any one of the pipes Line-04 and Line-05. By doing so, identification of the 3D models of all the pipes are attempted.

In step S156, whether or not all the pipes are identified is determined, the flow ends in a case where all the pipes are identified, and the flow proceeds to step S157 in a case where there is an unidentified pipe due to a certain reason.

In step S157, the operator manually identifies the unidentified pipe, and ends the flow.

By the above flow, the 3D model 5 with attribute illustrated in Fig. 8 can be created.

In the 3D model creation support system 4 configured as described above, a 3D model of each configuration element is created by adjusting limited shape parameters of shape models corresponding to each configuration elements in the same manner as in the first embodiment, and thus, it is possible to reduce the amount of calculation processing necessary for identifying each configuration elements, and to efficiently create the 3D model with attribute of the plant which is configured by a plurality of apparatuses connected to each other through the pipes.

Furthermore, the following advantageous effects can be achieved, compared with the first embodiment.

In the first embodiment, in a case where identification of a pipe can be performed only to an intermediate portion thereof due to the fact that a part of point group data of the pipe is lost for some reasons, or due to influence of a valve or the like provided in the intermediate portion of the pipe, an apparatus connected to an end of the pipe cannot be identified, and thus, the pipe is required to be identified by a manual operation of an operator. In contrast to this, in the second embodiment, the pipe is identified from both end portions, and thereby, even in a case where point group data of an intermediate portion of the pipe is lost, a 3D model of all pipes can be created by supplementing the intermediate portion. Accordingly, it is possible to reduce burden of the operator.

The present invention is not limited to the aforementioned embodiments, and includes various modification examples. For example, the aforementioned embodiments describe the present invention in detail so as to be easy to understand, and are not limited to the entire configuration which is described. In addition, it is possible to replace a part of configurations according to a certain embodiment into configurations according to other embodiments, and to add configurations according to other embodiments to a certain configurations according to a certain embodiment. In addition, it is possible to perform addition, removal, and replacement of other configurations with respect to a part of configurations according to each embodiment.

In addition, an example is described in which the present invention is applied to a plant having a plurality of apparatuses connected by pipes in the aforementioned embodiments, but as long as an object is configured by a plurality of apparatuses connected to each other or the like, the present invention can be applied thereto without being limited to this.

### Reference Signs List

1 point group data
2 plant system diagram
3 system information extraction means
4 3D model creation support system
5 3D model with attribute
6 search range
41 system information database
42 configuration element selection means
43 shape model library
44 configuration element identification means
421 operation screen
422 unidentified model list
423 narrowing condition setting region
424 identified model list

## Claims

1. A 3D model creation support system that supports creation of a 3D model based on point group data of a surface of an object which is configured with a plurality of configuration elements connected to each other, the system comprising:
a system information database in which system information including connection relationships between the plurality of configuration elements is registered;
a shape model library in which shape models corresponding to each of the plurality of configuration elements are registered;
configuration element selection means for selecting configuration elements whose 3D models are not created among the plurality of configuration elements, based on the system information which is registered in the system information database; and
configuration element identification means for acquiring a predetermined shape model corresponding to a predetermined configuration element which is selected by the configuration element selection means from the shape model library and creating a 3D model of the predetermined configuration element by matching the predetermined shape model to the point group data.

2. The 3D model creation support system according to Claim 1, wherein the configuration element identification means limits a range where the predetermined configuration element in the point group data exists, based on the system information which is registered in the system information database, and creates a 3D model of the predetermined configuration element by matching the predetermined shape model to point group data within the limited range.

3. The 3D model creation support system according to Claim 1, wherein the configuration element selection means selects a configuration element that is connected to a configuration element whose 3D model is previously created and whose 3D models are not created, among the plurality of configuration elements.

4. The 3D model creation support system according to Claim 1, wherein the object is a plant which includes a plurality of apparatuses and a plurality of pipes as configuration elements and in which the plurality of apparatuses are connected to each other through the plurality of pipes.

5. The 3D model creation support system according to Claim 4, wherein configuration element selection means selects all apparatuses whose 3D models are not created among the plurality of apparatuses, and thereafter selects a pipe whose 3D model is not created among the plurality of pipes.

6. The 3D model creation support system according to Claim 4, further comprising:
system information extraction means that extracts system information from a plant system diagram having system information including connection relationships between the plurality of apparatuses and the plurality of pipes, and registers the extracted system information in the system information database.

7. A 3D model creation support method based on point group data of a surface of an object which is configured with a plurality of configuration elements which are connected to each other, the method comprising:
configuration element selection processing of selecting configuration elements whose 3D models are not created among the plurality of configuration elements, based on system information including connection relationships between the plurality of configuration elements; and
configuration element identification processing of creating a 3D model of a predetermined configuration element by matching a shape model corresponding to the predetermined configuration element that is selected by the configuration element selection processing to the point group data.

8. The 3D model creation support method according to Claim 7, wherein, in the configuration element identification processing, a range is limited where the predetermined configuration element in the point group data exists, based on the system information, and a 3D model of the predetermined configuration element is created by matching the predetermined shape model to point group data within the limited range.

9. The 3D model creation support method according to Claim 7, wherein, in the configuration element selection processing, a configuration element is selected that is connected to a configuration element whose 3D model is previously created and whose 3D models are not created, among the plurality of configuration elements.
